Europäisches Patentamt

(19) European Patent Office

Office européen des brevets

(11) Numéro de publication: **0 100 689**
**A1**

(12) **DEMANDE DE BREVET EUROPEEN**

(21) Numéro de dépôt: 83400929.2

(22) Date de dépôt: 06.05.83

(51) Int. Cl.³: **C 08 J 5/18**
**C 08 L 23/04**

(30) Priorité: 14.05.82 FR 8208407

(43) Date de publication de la demande:
15.02.84 Bulletin 84/7

(84) Etats contractants désignés:
AT BE CH DE FR GB IT LI LU NL SE

(71) Demandeur: Société Chimique des Charbonnages S.A.
Tour Aurore Place des Reflets
F-92080 Paris La Défense Cédex 5(FR)

(72) Inventeur: Haas, Armand
7 Parc Mercier
F-62670 Mazingarbe(FR)

(74) Mandataire: Dubost, Thierry
Société Chimique des Charbonnages S.A. Service
Propriété Industrielle B.P. No 49
F-62160 Bully Les Mines(FR)

(54) Compositions de polymères d'éthylène et application à la fabrication de films.

(57) Compositions de polyéthylène haute densité et de copolymère éthylène/α-oléfine, comprenant:

(A) de 60 à 90 % en poids d'au moins un copolymère d'éthylène et d'α-oléfines ayant de 3 à 12 atomes de carbone, de densité comprise entre 0,905, et 0,925 g/cm3 et d'indice de fluidité compris entre 0,5 et 2,5 dg/mn et

(B) de 10 à 40 % en poids d'au moins un polymère d'éthylène de densité comprise entre 0,95 et 0,97 g/cm3 et d'indice de fluidité compris entre 0,05 et 1 dg/mn.

Application à la fabrication de films d'épaisseur comprise entre et 200 microns.

EP 0 100 689 A1

La présente invention se rapporte à des compositions de polymères d'éthylène de propriétés améliorées.

La présente invention a notamment pour objet d'améliorer certaines propriétés et d'améliorer le comportement, pendant leur transformation par extrusion, de copolymères linéaires de l'éthylène et d'$\alpha$-oléfines.

Le brevet belge n° 626.817 décrit des mélanges de

(A) 25 à 60 % en poids d'un copolymère d'éthylène et d'$\alpha$-oléfines ayant de 3 à 8 atomes de carbone, de densité comprise entre 0,930 et 0,943 g/cm3 et d'indice de fluidité compris entre 1 et 2, et

(B) 40 à 75 % en poids de polyéthylène ou de copolymère d'éthylène et d'$\alpha$-oléfines ayant de 3 à 8 atomes de carbone, de densité comprise entre 0,940 et 0,960 g/cm3 et d'indice de fluidité compris entre 0,5 et 20.

D'autre part le brevet français n° 2.145.650 décrit des mélanges de densité au moins égale à 0,930 g/cm3, comprenant de 50 à 97 % en poids de polyéthylène haute densité de poids moléculaire intermédiaire et de 3 à 50 % en poids de copolymère non élastomère de poids moléculaire élevé d'éthylène et d'$\alpha$-oléfine, la viscosité à l'état fondu du polyéthylène haute densité étant au moins 5 fois plus élevée que celle du copolymère. Les exemples de ce brevet, dans lesquels l'$\alpha$-oléfine est le propylène, montrent une amélioration de propriétés telles que la résistance au choc, la résistance à la fissuration sous contrainte et l'usinabilité.

La présente invention consiste en des compositions de polymères d'éthylène comprenant

(A) de 60 à 90 % en poids d'au moins un copolymère d'éthylène et d'$\alpha$-oléfines ayant de 3 à 12 atomes de carbone, de densité comprise entre 0,905 et 0,925 g/cm3 et d'indice de fluidité compris entre 0,5 et 2,5 dg/mn et

(B) de 10 à 40 % en poids d'au moins un polymère d'éthylène de densité comprise entre 0,95 et 0,97 g/cm3 et d'indice de fluidité compris entre 0,05 et 1 dg/mn.

Les copolymères (A) préférés pour la mise en oeuvre de la présente invention sont des copolymères d'éthylène et d'$\alpha$-oléfines comprenant au moins 4 atomes de carbone, ayant une teneur moyenne en motifs $\alpha$-oléfines comprise entre 1 et 8 % en moles et caractérisés en ce que la distribution des motifs $\alpha$-oléfines dans le copolymère est hétérogène, ledit copolymère comprenant des fractions cristallines et des fractions amorphes, et en ce que la teneur en motifs $\alpha$-oléfines dans le copolymère varie entre au moins 0,2 et au plus 5 fois leur teneur moyenne selon les fractions considérées.

Ces copolymères de structure particulière, décrits dans la demande de brevet français n° 81/13.598, peuvent subsidiairement être caractérisés en ce que leurs fractions cristallines présentent un pic de fusion compris entre 118° et 130°C et représentent de 20 à 50 % en poids du copolymère total. Dans la suite de la description, le terme copolymère sera employé pour désigner à la fois des polymères binaires comportant une α-oléfine en sus de l'éthylène et des polymères ternaires comportant deux α-oléfines en sus de l'éthylène. Ces copolymères utilisables selon la présente invention peuvent être subsidiairement caractérisés par une masse moléculaire moyenne comprise entre 15.000 et 60.000 et/ou un indice de polydispersité compris entre 3 et 9 pour les polymères binaires, 4 et 12 pour les polymères ternaires. Dans la définition précédente il faut entendre, de manière conventionnelle dans la technique des polymères, la masse moléculaire moyenne comme étant la masse moléculaire moyenne en nombre Mn et l'indice de polydispersité comme étant le rapport Mw/Mn de la masse moléculaire moyenne en poids à la masse moléculaire moyenne en nombre. D'autre part les α-oléfines pouvant entrer dans la constitution des copolymères hétérogènes selon l'invention sont par exemple le butène-1, l'hexène-1, le méthyl-4-pentène-1, l'octène-1. Lorsque deux α-oléfines sont simultanément présentes dans le copolymère selon l'invention (cas d'un terpolymère) leur teneur moyenne totale est, comme décrit précédemment, comprise entre 1 et 8 % en moles et en outre le rapport de leurs teneurs moyennes respectives est de préférence compris entre 0,25 et 4. Ainsi par exemple un terpolymère éthylène/butène-1/hexène-1 selon l'invention comprenant en moyenne 95 % en moles de motifs d'éthylène pourra comprendre en moyenne de 1 à 4 % en moles de motifs butène-1 et en moyenne de 4 à 1 % en moles de motifs hexène-1.

Le procédé de production des copolymères préférés pour la réalisation des compositions selon l'invention, également décrit dans la demande de brevet français n° 81/13.598, consiste à copolymériser l'éthylène et les α-oléfines ayant au moins 4 atomes de carbone dans au moins un réacteur comportant au moins une zone, à une température comprise entre 180° et 320°C et sous une pression comprise entre 300 et 2500 bars, au moyen d'un système catalytique de type Ziegler comprenant d'une part un activateur choisi parmi les hydrures et les composés organométalliques des métaux des groupes I à III de la Classification Périodique et d'autre part au moins un composé halogéné de métal de transition, et il est caractérisé en ce que d'une part le flux gazeux alimentant le réacteur est constitué en régime stationnaire de 10 à 80 % en poids d'éthylène et de 20 à 90 % en poids d' α-oléfines et d'autre part le système catalytique présente une réactivité vis-à-vis de l'éthylène très supérieure, de préférence de 5 à 15 fois supérieure, à sa réactivité vis-à-vis des ɑ-oléfines.

Un exemple non limitatif de tels composés a pour formule :

$$(TiCl_3, \frac{1}{3} AlCl_3) (MX_3)_x (MgCl_2)_y$$

dans laquelle $0,3 \leqslant x \leqslant 3$, $0 \leqslant y \leqslant 20$, M est un métal de transition choisi dans les groupes VB, VIB et VIII de la Classification Périodique et X est un halogène. Les proportions de l'activateur et du composé halogéné de métal de transition seront choisies de manière telle que le rapport atomique du métal de l'activateur au métal de transition (ou, dans le cas décrit ci-dessus, à la somme de Ti + M) soit compris entre 1 et 10. Le temps de séjour moyen du système catalytique dans le réacteur de polymérisation est généralement compris entre 2 et 100 secondes.

Le polymère d'éthylène (B) utilisable selon la présente invention est généralement un homopolymère d'éthylène, dit polyéthylène haute densité. Ce polymère peut être fabriqué par différents procédés de polymérisation déjà connus. Il présente de préférence une large dispersion des masses moléculaires, caractérisable par un indice de polydispersité (comme défini précédemment) compris entre 8 et 18. Un procédé particulier pour l'obtention de tels polymères est notamment un procédé de polymérisation sous pression et températures élevées, dont plusieurs modes de réalisation ont été décrits dans les brevets français n° 2.346.374, 2.399.445, 2.445.343 et 2.445.344.

Les compositions selon la présente invention ont une densité comprise entre 0,910 et 0,940 g/cm3 et présentent de nombreux avantages. En premier lieu elles permettent, pour la fabrication de films, de limiter le fluage et d'améliorer la stabilité à l'extrusion par rapport à l'extrusion de copolymères (A) utilisés seuls. En second lieu elles permettent de rigidifier ces copolymères et elles procurent une amélioration significative de la résistance au déchirement transversal et de la traction-choc des films extrudés.

Les compositions selon l'invention trouvent donc une application privilégiée dans la fabrication de films de performances améliorées et d'épaisseur comprise entre 10 et 200 microns. Ces films sont obtenus à partir des compositions selon l'invention soit par extrusion-soufflage à travers une filière cylindrique et à une température généralement comprise entre 200° et 280°C, avec un taux de gonflage compris entre 1,5 et 4, soit par extrusion à travers une filière plate.

Les films ainsi constitués ont de nombreux usages tels que, notamment, les sacs de grande contenance, les films rigides pour l'emballage automatique, les films agricoles.

Les exemples suivants sont donnés à titre illustratif et non limitatif.

## EXEMPLE 1 - Fabrication d'un copolymère éthylène/butène-1 hétérogène

On copolymérise l'éthylène et le butène-1 dans un réacteur autoclave de forme cylindrique fonctionnant sous une pression de 900 bars et muni intérieurement d'un agitateur et d'écrans métalliques qui délimitent trois zones. La zone 1, maintenue à une température de 210°C, a un volume double de celui de chacune des deux zones suivantes, est alimentée par un flux de 200 kg/h d'un mélange comprenant 36 % en poids de butène-1 et 64 % en poids d'éthylène et reçoit un système catalytique comprenant d'une part du diméthyléthyldiéthylsiloxalane et d'autre part un composé de formule $TiCl_3$, $\frac{1}{3} AlCl_3$, $VCl_3$, en quantité respectivement telle que le rapport atomique Al/Ti soit égal à 3. La zone 2, maintenue à la température de 240°C, est alimentée par un flux de 55 kg/h du même mélange que précédemment et reçoit le même système catalytique. Enfin la zone 3, à la sortie de laquelle le mélange réactionnel contenant le copolymère est évacué vers un dispositif de séparation et de recyclage, est maintenue à la température de 280°C et ne reçoit ni monomère ni catalyseur. Le temps de séjour moyen du système catalytique dans le réacteur est de 43 secondes.

On obtient ainsi, avec un rendement catalytique de 6,2 kilogrammes de copolymère par milliatome de métal de transition (titane et vanadium), un copolymère d'indice de fluidité (mesuré selon la norme ASTM D 1238-73) égal à 0,8 dg/mn, de masse volumique (mesurée selon la norme NF T 51-063) égale à 0,919 g/cm3, de masse moléculaire moyenne en nombre (mesurée par chromatographie de perméation de gel) égale à 43.000, d'indice de polydispersité Mw/Mn égale à 3,6, ayant une teneur molaire moyenne en motifs butène-1 égale à 3,2 % , un point de fusion de la fraction cristalline (déterminé par analyse enthalpique différentielle) égal à 122°C et dont l'hétérogénéité de la distribution du butène-1 (déterminée par un test de fractionnement du copolymère) s'exprime par le multiple (2,2 fois) et le sous-multiple (0,5 fois) de la teneur moyenne entre lesquels varie la teneur en motifs butène-1 selon les fractions considérées.

## EXEMPLES 2 à 4

On transforme en films d'épaisseur 50 µm, par extrusion-soufflage dans les conditions suivantes :

- température de la composition 230°C
- vitesse de rotation de la vis d'extrusion : 80 tours/mn

- taux de gonflage : 2,0

des compositions comprenant :

(A) un copolymère hétérogène éthylène/butène-1 de mêmes caractéristiques que celui de l'exemple 1, à l'exception de l'indice de fluidité qui est ici égal à 1,2 dg/mn, et

(B) un polyéthylène de densité égale à 0,952 g/cm3, d'indice de fluidité égal à 0,1 et d'indice de polydispersité égal à 6.

Dans le tableau I figurent, outre la proportion en poids du polymère (B) dans la composition, les résultats des mesures, sur ces films, de la résistance au déchirement transversal RDT (déterminée et exprimée comme précédemment) et de la traction-choc TC exprimée en kg-cm/cm2 et déterminée selon la norme DIN 53 448.

<div align="center">TABLEAU I</div>

| Exemple | (B) % | RDT | TC |
|---------|-------|-----|------|
| 2 | 0 | 400 | 3 500 |
| 3 | 10 | 660 | 4 900 |
| 4 | 30 | 860 | 3 800 |

## REVENDICATIONS

1. Compositions de polyéthylène haute densité et de copolymère éthylène/ -oléfine, caractérisées en ce qu'elles comprennent :

(A) de 60 à 90 % en poids d'au moins un copolymère d'éthylène et d'$\alpha$-oléfines ayant de 3 à 12 atomes de carbone, de densité comprise entre 0,905 et 0,925 g/cm3 et d'indice de fluidité compris entre 0,5 et 2,5 dg/mn et

(B) de 10 à 40 % en poids d'au moins un polymère d'éthylène de densité comprise entre 0,95 et 0,97 g/cm3 et d'indice de fluidité compris entre 0,05 et 1 dg/mn.

2. Compositions selon la revendication 1, dans lesquelles le copolymère (A) est un copolymère d'éthylène et d'$\alpha$-oléfine comprenant au moins 4 atomes de carbone, ayant une teneur moyenne en motifs $\alpha$-oléfines comprise entre 1 et 8 % en moles et caractérisé en ce que la distribution des motifs $\alpha$-oléfines dans le copolymère est hétérogène, ledit copolymère comprenant des fractions cristallines et des fractions amorphes, et en ce que la teneur en motifs $\alpha$-oléfines dans le copolymère varie entre au moins 0,2 et au plus 5 fois leur teneur moyenne selon les fractions considérées.

3. Compositions selon la revendication 2, caractérisées en ce que dans le copolymère (A) les fractions cristallines présentent un pic de fusion compris entre 118° et 130°C et représentent de 20 à 50 % en poids du copolymère total.

4. Compositions selon l'une des revendications 2 et 3, caractérisées en ce que la masse moléculaire moyenne du copolymère (A) est comprise entre 15.000 et 60.000.

5. Compositions selon l'une des revendications 2 à 4, caractérisées en ce que le copolymère (A) comporte une seule $\alpha$-oléfine et en ce que son indice de polydispersité est compris entre 3 et 9.

6. Compositions selon l'une des revendications 2 à 5, caractérisées en ce que le copolymère (A) comporte deux $\alpha$-oléfines dont le rapport des teneurs molaires moyennes respectives est compris entre 0,25 et 4.

7. Compositions selon la revendication 6, caractérisées en ce que l'indice de polydispersité du copolymère (A) est compris entre 4 et 12.

8. Compositions selon l'une des revendications 1 à 7, caractérisées en ce que l'$\alpha$-oléfine est choisie parmi le butène-1, l'hexène-1, le méthyl-4-pentène-1 et l'octène-1.

9. Compositions selon l'une des revendications 1 à 8, caractérisées en ce que l'indice de polydispersité du polymère (B) est compris entre 4 et 18.

10. Application des compositions selon l'une des revendications 1 à 9 à la fabrication de films d'épaisseur comprise entre 10 et 200 microns.

Office européen
des brevets

**RAPPORT DE RECHERCHE EUROPEENNE**

Numéro de la demande

EP 83 40 0929

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A-2 070 625 (NIPPON OIL)<br>* Revendications 1-13 * | 1-10 | C 08 J 5/18<br>C 08 L 23/04 |
| X | GB-A-2 066 271 (NIPPON OIL)<br>* Revendication 1 * | 1-10 | |
| A | FR-A-1 542 917 (CHEMISCHE WERKE HÜLS)<br>* Résumé * | 1 | |
| A | FR-A-1 394 473 (PHILLIPS PETROLEUM)<br>* Résumé * | 1 | |

| | DOMAINES TECHNIQUES RECHERCHES (Int. Cl. ³) |
|---|---|
| | C 08 L<br>C 08 J |

Le présent rapport de recherche a été établi pour toutes les revendications

| Lieu de la recherche<br>LA HAYE | Date d'achèvement de la recherche<br>28-09-1983 | Examinateur<br>GOOVAERTS R.E. |
|---|---|---|